# EUROPÄISCHE PATENTSCHRIFT

(11) **EP 2 640 596 B1**
(45) Veröffentlichungstag und Bekanntmachung des Hinweises auf die Patenterteilung: **05.09.2018**
(21) Anmeldenummer: 11804995.6
(22) Anmeldetag: 15.12.2011
(51) Int. Cl.: B60L 11/18

(54) **LADEVORRICHTUNG ZUM LADEN EINES FAHRZEUGAKKUMULATORS**
CHARGING DEVICE FOR CHARGING A VEHICLE ACCUMULATOR
DISPOSITIF DE CHARGE CONÇU POUR CHARGER UN ACCUMULATEUR DE VÉHICULE

(30) Priorität: 14.01.2011 DE 102011002707
(43) Veröffentlichungstag der Anmeldung: 25.09.2013
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2011/072892
(87) Internationale Veröffentlichungsnummer: WO 2012/095234

(56) Entgegenhaltungen:
- EP-A1- 2 219 278
- US-A1- 2006 028 178
- US-A1- 2006 089 733
- US-A1- 2010 076 825

## Beschreibung

Die Erfindung betrifft ein Verfahren und eine Vorrichtung zum Laden eines Fahrzeugakkumulators, insbesondere ein Verfahren und eine Vorrichtung zum Bereitstellen von Ladeprogrammen bzw. Ladeprofilen für Elektrofahrzeuge.

Elektrofahrzeuge verfügen über aufladbare Fahrzeugakkumulatoren, die an einer Ladestation elektrisch aufgeladen werden können. Dabei können verschiedene Lademodalitäten realisiert werden. Der Aufladevorgang kann von einer Ladecharakteristik des Fahrzeugakkumulators abhängen. Weiterhin ist es möglich, dass der Ladevorgang bzw. das Ladeprofil abhängig von einem Tarif bzw. einem dem Fahrzeugakkumulator zugeordneten Benutzerprofil ausgestaltet ist. Es gibt eine große Vielzahl verschiedener Typen von Fahrzeugakkumulatoren, die jeweils eine bestimmte physikalische Ladecharakteristik erfordern. Weiterhin gibt es eine Vielzahl unterschiedlicher Benutzerprofile und möglicher Ladetarife, so dass bei herkömmlichen Ladesäulen es bisher nicht möglich ist, dem jeweiligen Fahrzeugakkumulator ein akkuspezifisches Ladeprofil bereitzustellen.

So ist aus der gattungsbildenden US 2006/028178 A1 eine Ladevorrichtung zum Laden eines daran angeschlossenen Fahrzeugakkumulators bekannt. Diese Ladevorrichtung umfasst eine Steuereinheit welche in Abhängigkeit der gemessenen Batteriespannung aus einer Lookup-Tabelle Parameter auswählt und entsprechend die Energieversorgung zur Erzeugung der Ladespannung für den Fahrzeugakkumulator steuert. Diese Lookup-Tabelle enthält Informationen hinsichtlich der unterschiedlichen durch die Ladevorrichtung zu ladenden Akkumulatoren, bspw. die Nominalspannung, Lehrlaufspannung, max. oder optimale Ladespannung usw.

Ferner beschreibt die US 2006/089733 A1 einen Remote Geräte Manager, welcher über Datenleitungen oder ein Netzwerk Geräte, wie bspw. Akkumulatoren und Ladevorrichtungen für solche Akkumulatoren sowie Fahrzeuge mit solchen Akkumulatoren überwacht und steuert. Dieser Remote Geräte Manager umfasst eine Steuereinheit, welche Befehle an eine lokale Steuereinheit bspw. einer Ladevorrichtung überträgt. Mittels des Remote Geräte Managers werden Messdaten der Geräte, bspw. einer Ladevorrichtung und eines Akkumulators gesammelt, die als Parameter zur Ermittlung eines Nutzerprofils verwendet werden. Ein solches Nutzerprofil umfasst Informationen hinsichtlich der Nutzung der Geräte, also bspw. der Ladevorrichtung und des Akkumulators. Auf der Basis des erfassten Nutzerprofils werden diese Geräte bspw. die Ladevorrichtung und der Akkumulator gesteuert, indem ein Automatic Controller als Steuereinheit Steuerbefehle erzeugt und diese den Geräten über eine Datenleitung oder ein Netzwerk zugeführt werden.

Es ist daher eine Aufgabe der vorliegenden Erfindung ein Verfahren und eine Vorrichtung zu schaffen, die sicherstellen, dass ein akkuspezifisches Ladeprofil bzw. Ladeprogramm bei der jeweiligen Ladestation, an welche der Fahrzeugakkumulator angeschlossen wird, bereitgestellt werden kann.

Diese Aufgabe wird erfindungsgemäß durch eine Ladevorrichtung mit den in Patentanspruch 1 angegebenen Merkmalen gelöst.

Die Erfindung schafft eine Ladevorrichtung zum Laden eines daran angeschlossenen Fahrzeugakkumulators, welcher unter Steuerung eines konfigurierbaren Ladeprogramms aufladbar ist, welches durch einen Ladeprogrammspeicher einer Steuereinheit der Ladevorrichtung bereitgestellt wird, die zum Laden des Fahrzeugakkumulators das bereitgestellte Ladeprogramm ausführt.

Die Ladevorrichtung weist eine Authentisierungseinheit auf, welche zur Authentisierung des Fahrzeugakkumulators gegenüber der Ladevorrichtung vorgesehen ist.

Ein in dem Ladeprogrammspeicher gespeichertes Ladeprogramm wird in Abhängigkeit des Akkumulatortyps des an der Ladevorrichtung angeschlossenen Fahrzeugakkumulators und eines Authentisierungsergebnisses von dem Ladeprogrammspeicher zu der Steuereinheit der Ladevorrichtung übertragen, wobei die Ladevorrichtung das Ladeprogramm zum Laden des Fahrzeugakkumulators ausführt.

Bei einer möglichen Ausführungsform der erfindungsgemäßen Ladevorrichtung befindet sich der Ladeprogrammspeicher in der Ladevorrichtung.

Bei einer weiteren möglichen Ausführungsform der erfindungsgemäßen Ladevorrichtung befindet sich der Ladeprogrammspeicher in einem mit der Ladevorrichtung über ein Datennetzwerk verbundenen Ladedatenserver. Bei diesem Ladedatenserver kann es sich um einen Ladedatenserver des Herstellers des jeweiligen Fahrzeugakkumulators handeln.

Bei einer weiteren möglichen Ausführungsform der erfindungsgemäßen Ladevorrichtung befindet sich der Ladeprogrammspeicher innerhalb des angeschlossenen Fahrzeugakkumulators.

Bei einer möglichen Ausführungsform ist die Ladevorrichtung in einer Ladezapfsäule vorgesehen.

Bei einer alternativen Ausführungsform befindet sich die Ladevorrichtung in einem Elektrofahrzeug.

Bei einer möglichen Ausführungsform der erfindungsgemäßen Ladevorrichtung ist in dem Ladeprogrammspeicher für die verschiedenen Fahrzeugakkumulatoren jeweils mindestens ein zugehöriges Ladeprogramm gespeichert.

Bei einer möglichen Ausführungsform sind für jeden Fahrzeugakkumulator bzw. jeden Fahrzeugakkumulatortyp verschiedene Arten von Ladeprogrammen vorgesehen.

Bei einer möglichen Ausführungsform umfassen diese verschiedenen Ladeprogramme beispielsweise ein Schnellladeprogramm, ein Normalladeprogramm oder ein Pufferladeprogramm für den jeweiligen Fahrzeugakkumulator.

Dabei wird vorzugsweise ein Schnellladeprogramm zum Aufladen des Fahrzeugakkumulators mit einem hohen Ladestrom in einer vorbestimmten geringen Zeitdauer vorgesehen.

Weiterhin wird ein Normalladeprogramm zum Aufladen des Fahrzeugakkumulators mit einem geringen Ladestrom in einer vorbestimmten längeren Zeitdauer vorgesehen.

Weiterhin kann ein Pufferladeprogramm für den jeweiligen Fahrzeugakkumulator vorgesehen sein.

Weiterhin ist es möglich, für verschiedene Ladetarife verschiedene Ladeprogramme vorzusehen.

Bei einer möglichen Ausführungsform der erfindungsgemäßen Ladevorrichtung wird das Ladeprogramm zum Aufladen des jeweiligen Fahrzeugakkumulators von dem Ladeprogrammspeicher nach erfolgter Authentisierung des Fahrzeugakkumulators kryptographisch verschlüsselt zu der Steuereinheit der Ladevorrichtung übertragen.

Bei einer möglichen Ausführungsform der erfindungsgemäßen Ladevorrichtung bezieht die Steuereinheit der Ladevorrichtung zur Entschlüsselung des verschlüsselt empfangenen Ladeprogramms einen kryptographischen Schlüssel von einem Server des Herstellers des jeweiligen Fahrzeugakkumulators.

Die Steuereinheit der Ladevorrichtung führt anschließend das mittels des bezogenen kryptographischen Schlüssels des Fahrzeugakkumulatorherstellers entschlüsselte Ladeprogramm zum Aufladen des an die Ladevorrichtung angeschlossenen Fahrzeugakkumulators aus.

Ferner wird die Aufgabe erfindungsgemäß durch ein Verfahren zur Laden eines Fahrzeugakkumulators mit den in Patentanspruch 9 angegebenen Merkmalen gelöst.

Die Erfindung schafft somit ein Verfahren zum Laden eines Fahrzeugakkumulators durch eine Ladevorrichtung unter Steuerung eines konfigurierbaren Ladeprogramms, welches in Abhängigkeit des Fahrzeugakkumulators aus einem Ladeprogrammspeicher ausgelesen und durch eine Steuereinheit der Ladevorrichtung zum Laden des Fahrzeugakkumulators ausgeführt wird.
nach Anschluss an die Ladevorrichtung authentisiert sich der Fahrzeugakkumulator zunächst gegenüber der Ladevorrichtung.

Das Ladeprogramm wird zum Laden des Fahrzeugakkumulators aus einem Ladeprogrammspeicher in Abhängigkeit des Authentisierungsergebnisses und des Akkumulatortyps des Fahrzeugakkumulators selektiert und aus dem Ladeprogrammspeicher ausgelesen und anschließend an die Steuereinheit der Ladevorrichtung zur Ausführung übertragen, wobei das Ladeprogramm zum Laden des Fahrzeugakkumulators ausgeführt wird.

Dabei kann bei einer möglichen Ausführungsform das Ladeprogramm zum Aufladen des Fahrzeugakkumulators kryptographisch verschlüsselt zu der Steuereinheit der Ladevorrichtung übertragen werden.

Bei dieser Ausführungsform kann die Steuereinheit der Ladevorrichtung zur Entschlüsselung des verschlüsselt empfangenen Ladeprogramms bei einer möglichen Ausführungsvariante einen kryptographischen Schlüssel von einem Server des Hersteller des jeweiligen Fahrzeugakkumulators beziehen.

Mit Hilfe dieses erhaltenen kryptographischen Schlüssels wird anschließend das verschlüsselt empfangene Ladeprogramm entschlüsselt und zum Aufladen des Fahrzeugakkumulators ausgeführt.

Im Weiteren werden Ausführungsformen der erfindungsgemäßen Ladevorrichtung und des erfindungsgemäßen Verfahrens zum Laden eines daran angeschlossenen Fahrzeugakkumulators unter Bezugnahme auf die beigefügten Figuren beschrieben.

Es zeigen:
- Fig. 1: ein Ausführungsbeispiel einer Anordnung, die eine erfindungsgemäße Ladevorrichtung zum Laden eines Fahrzeugakkumulators aufweist;
- Fig. 2a, 2b, 2c: verschiedene Ausführungsvarianten zur Anordnung einer erfindungsgemäßen Ladevorrichtung;
- Fig. 3: ein Signaldiagramm zur Erläuterung eines Ausführungsbeispiels des erfindungsgemäßen Verfahrens zum Laden eines Fahrzeugakkumulators;
- Fig. 4: ein Ablaufdiagramm zur Darstellung einer möglichen Ausführungsvariante des erfindungsgemäßen Verfahrens zum Laden eines Fahrzeugakkumulators;
- Fig. 5: ein Ablaufdiagramm zur Darstellung einer weiteren Ausführungsvariante des erfindungsgemäßen Verfahrens zum Laden eines Fahrzeugakkumulators;
- Fig. 6: ein Ablaufdiagramm zur Darstellung einer weiteren Ausführungsvariante des erfindungsgemäßen Verfahrens zum Laden eines Fahrzeugakkumulators.

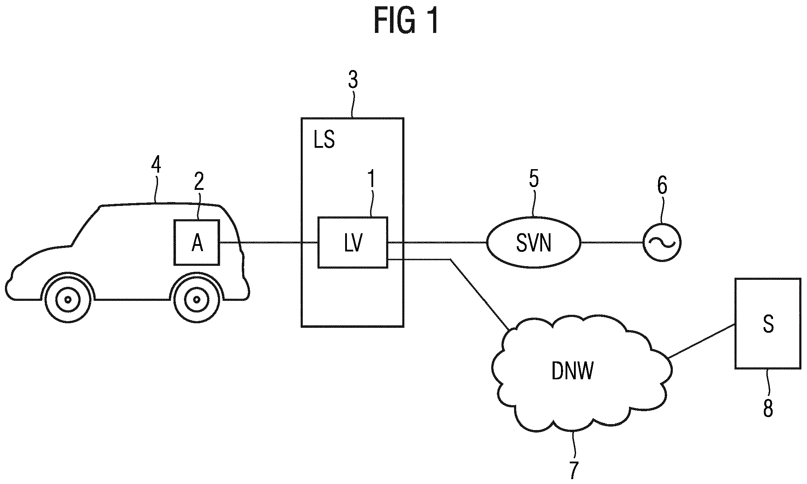

Wie man aus Fig. 1 erkennen kann, befindet sich bei dem darin dargestellten Ausführungsbeispiel die erfindungsgemäße Ladevorrichtung 1 zum Laden eines daran angeschlossenen Fahrzeugakkumulators 2 in einer Ladesäule 3. Der Fahrzeugakkumulator 2 befindet sich bei dem in Fig. 1 dargestellten Beispiel innerhalb eines Elektrofahrzeugs 4. Alternativ kann es sich bei dem Fahrzeugakkumulator 2 auch um einen auswechselbaren Fahrzeugakkumulator handeln, der direkt an die Ladesäule 3 angeschlossen werden kann. Die Ladevorrichtung 1 ist an ein Stromversorgungsnetzwerk 5 angeschlossen und bezieht über das Stromversorgungsnetzwerk 5 elektrische Energie zum Aufladen des Fahrzeugakkumulators 2. Bei dem in Fig. 1 dargestellten Beispiel wird die elektrische Energie durch einen Generator 6 erzeugt. Weiterhin kann die Ladevorrichtung 1 über ein Datennetzwerk 7 mit einem Server 8 verbunden sein, bei dem es sich beispielsweise um einen Server eines Fahrzeugakkumulatorherstellers handeln kann. Weiterhin kann es sich bei dem Server 8 um den Server eines Ladestationsbetreibers handeln. An dem Stromversorgungsnetzwerk 5 und an dem Datennetzwerk 7 kann eine Vielzahl von Ladestationen 3 zum Aufladen von Fahrzeugakkumulatoren angeschlossen sein. Jede Ladestation 3 verfügt über mindestens einen Ladeanschluss zum Anschluss mindestens eines Akkumulators 2.

Bei der in Fig. 1 dargestellten Ausführungsvariante befindet sich die Ladevorrichtung 1 zum Laden des Fahrzeugakkumulators innerhalb der Ladesäule 3. Der Fahrzeugakkumulator 2 wird mittels der erfindungsgemäßen Ladevorrichtung 1 zur Steuerung eines konfigurierbaren Ladeprogramms aufgeladen, wobei dieses Ladeprogramm von einem Ladeprogrammspeicher zu einer in der Ladevorrichtung 1 integrierten Steuereinheit übertragen wird, die das erhaltene Ladeprogramm zum Laden des Fahrzeugakkumulators 2 anschließend ausführt. Bei einer möglichen Ausführungsform weist die Ladevorrichtung 1 neben der Ladesteuereinheit zusätzlich eine Authentisierungseinheit auf, welche zur Authentisierung eines Fahrzeugakkumulators gegenüber der Ladevorrichtung 1 vorgesehen ist. Die Lade-Programmspeicher können sich bei einer möglichen Ausführungsform ebenfalls innerhalb der Ladevorrichtung 1 oder der Ladesäule 3 befinden. Alternativ ist es möglich, dass der Ladeprogrammspeicher in dem aufzuladenden Fahrzeugakkumulator 2 selbst vorgesehen ist und durch die Ladevorrichtung 1 über eine Datenschnittstelle ausgelesen wird. Diese Datenschnittstelle kann parallel zu der in Fig. 1 dargestellten Stromladeschnittstelle vorgesehen sein. Alternativ wird das Ladeprogramm über die Stromladeschnittstelle von dem Fahrzeugakkumulator 2 zu der Ladevorrichtung 1 übertragen. Bei einer weiteren Ausführungsvariante bezieht die Ladevorrichtung 1 das Ladeprogramm von einem Ladeprogrammspeicher, welcher sich in einem entfernten Ladedatenserver 8 befindet bzw. in einer Datenbank, auf die ein entsprechender Ladedatenserver Zugriff hat. Im Fig. 1 dargestellten Ausführungsbeispiel kann beispielsweise der Ladeprogrammspeicher in dem Server 8 vorgesehen sein. Bei dieser Ausführungsform bezieht die Ladevorrichtung 1 das Ladeprogramm über eine entsprechende Anfrage von dem Server 8. Der Server 8 ist beispielsweise ein Server eines Fahrzeugakkumulatorherstellers, welcher den Fahrzeugakkumulator 2 hergestellt hat.

Bei einer möglichen Ausführungsform wird ein in dem Ladeprogrammspeicher gespeichertes Ladeprogramm in Abhängigkeit des Akkumulatortyps des an die Ladevorrichtung 1 angeschlossenen Fahrzeugakkumulators 2 selektiert. Hierzu besitzt die Ladevorrichtung 1 eine Erkennungseinrichtung, die es erlaubt, den angeschlossenen Fahrzeugakkumulator 2 bzw. dessen Typ zu erkennen. Bei einer möglichen Ausführungsform überträgt der angeschlossene Fahrzeugakkumulator 2 eine entsprechende Typkennung an die Ladevorrichtung 1. Darin kann die Selektion des Ladeprogramms zusätzlich anhand des von der Authentisierungseinheit der Ladevorrichtung 1 gelieferten Authentisierungsergebnisses erfolgen.

Für jeden Fahrzeugakkumulator bzw. jeden Fahrzeugakkumulatortyp können ein Ladeprogramm oder mehrere verschiedene Ladeprogramme gespeichert sein. Beispielsweise ist für den Fahrzeugakkumulator 2 ein Schnellladeprogramm zum Aufladen des Fahrzeugakkumulators mit einem hohen Ladestrom in einer vorbestimmten geringen Zeitdauer vorgesehen sowie ein Normalladeprogramm zum Aufladen des Fahrzeugakkumulators 2 mit einem relativ geringen Ladestrom in einer vorbestimmten längeren Zeitdauer. Weiterhin kann für den Fahrzeugakkumulator 2 zusätzlich ein Pufferladeprogramm vorgesehen sein. Beispielsweise beträgt die Ladezeit bei einem Schnellladeprogramm 3 Stunden bei einem Ladestrom von 15 A und beispielsweise einer Ladespannung von 15,4 V. Weiterhin beträgt die Ladezeit bei einem Normalladeprogramm 2B 8 Stunden bei einem relativ geringen Ladestrom von 2 A und einer Ladespannung von 15,4 V. Bei einem Pufferladeprogramm beträgt der Ladestrom beispielsweise 200 mA bei einer Ladespannung von 15,4 V. In einer anderen Variante ist ein Hochspannungs-Schnellladen bei einer Ladespannung von z.B. 400V und einem Ladestrom von 60 A möglich.

Bei einer möglichen Ausführungsvariante wird das Ladeprogramm von dem Ladeprogrammspeicher in der Ladevorrichtung 1 unverschlüsselt übertragen. Bei einer bevorzugten Ausführungsform erfolgt die Übertragung des Ladeprogramms von dem Ladeprogrammspeicher zu der Ladevorrichtung 1 kryptographisch geschützt. Dabei kann das Ladeprogramm zum Aufladen des Fahrzeugakkumulators 2 von dem Ladeprogrammspeicher nach erfolgten Authentisierung des Fahrzeugakkumulators 2 gegenüber der Ladevorrichtung 1 kryptographisch verschlüsselt übertragen werden. Bei dieser Ausführungsform erhält somit die Steuereinheit der Ladevorrichtung 1 das Ladeprogramm zum Aufladen des Fahrzeugakkumulators 2 in verschlüsselter Form. Bei dieser Ausführungsform bezieht die Steuereinheit der Ladevorrichtung 1 zur Entschlüsselung des verschlüsselt empfangenen Ladeprogramms einen kryptographischen Schlüssel bei einer möglichen Ausführungsform von einem Server 8 des Herstellers des jeweiligen Fahrzeugakkumulators. Mittels des empfangenen kryptographischen Schlüssels wird dabei somit das Ladeprogramm zunächst entschlüsselt und anschließend durch die Steuereinheit der Ladevorrichtung 1 zum Aufladen des Fahrzeugakkumulators 2 ausgeführt. Durch diese verschlüsselte Übertragung des Ladeprogramms kann ein erhöhter Schutz gegenüber unerwünschten Manipulationen erreicht werden.

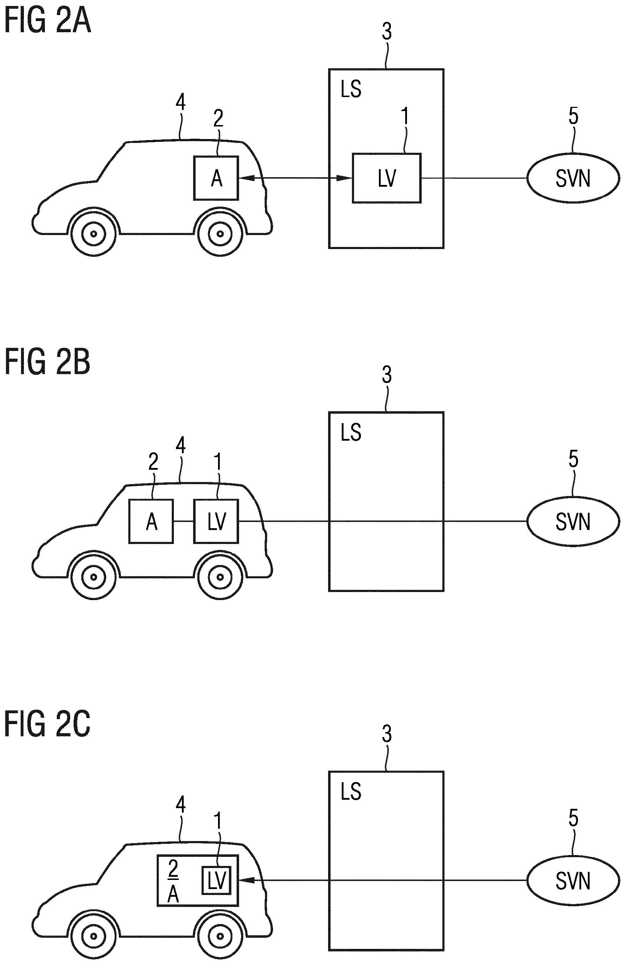

Die Fig. 2A, 2B, 2C zeigen verschiedene Varianten, bei denen die erfindungsgemäße Ladevorrichtung 1 an verschiedenen Orten angebracht ist.

Die in Fig. 2A dargestellte Anordnung entspricht der in Fig. 1 dargestellten Ausführungsform. Bei dieser Ausführungsvariante befindet sich die Ladevorrichtung 1 gemäß der Erfindung in einer Ladesäule 3.

Bei der in Fig. 2B dargestellten Ausführungsvariante befindet sich die Ladevorrichtung 1 innerhalb eines Elektrofahrzeugs 4 und steuert das Aufladen des Fahrzeugakkumulators 2 entsprechend dem zugehörigen Ladeprogramm.

Bei der in Fig. 2C dargestellten Ausführungsvariante befindet sich die Ladevorrichtung 1 innerhalb des aufzuladenden Fahrzeugakkumulators 2 als integrierte Komponente, so dass der Fahrzeugakkumulator 2 ohne Weiteres austauschbar ist.

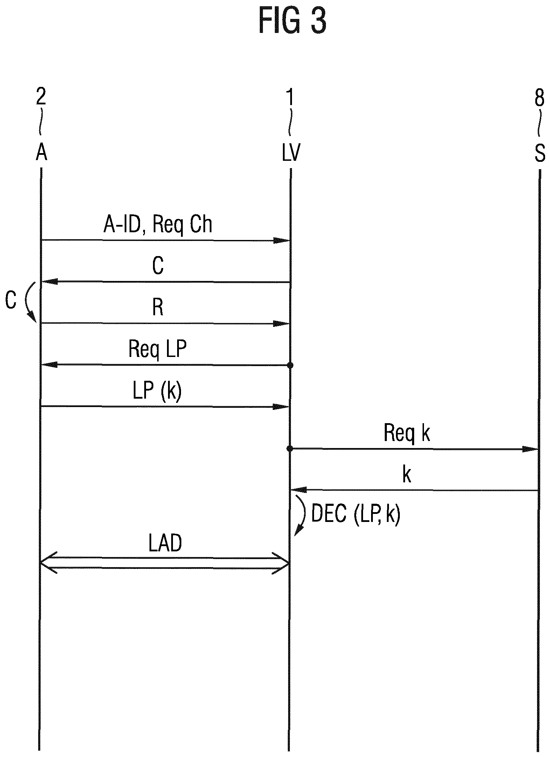

Fig. 3 zeigt ein Signaldiagramm zur Erläuterung der Funktionsweise des erfindungsgemäßen Verfahrens zum Laden eines Fahrzeugakkumulators 2. Bei der in Fig. 3 dargestellten Ausführungsvariante bezieht die Ladevorrichtung 1 das Ladeprogramm aus einem Datenspeicher des Fahrzeugakkumulators 2. Zunächst überträgt der aufzuladende Fahrzeugakkumulator 2, nachdem er an die Ladesäule 3 angeschlossen worden ist, eine Akkumulator-ID und fordert die Ladesäule 3, einen Ladevorgang einzuleiten. In dem in Fig. 3 dargestellten Ausführungsbeispiel identifiziert sich der angeschlossene Fahrzeugakkumulator 2 zunächst mittels eines Challenge-Response-Verfahrens gegenüber der Ladevorrichtung 1, welche ihm eine Challenge C sendet und die von dem Fahrzeugakkumulator 2 berechnete Response überprüft. Ist die Authentisierung des angeschlossenen Fahrzeugakkumulators 2 erfolgreich abgeschlossen, fordert die Ladevorrichtung 1 von dem Fahrzeugakkumulator 2 das in seinem Datenspeicher abgelegte Ladeprogramm an. Dieses Ladeprogramm wird anschließend, wie in Fig. 3 dargestellt, von dem Fahrzeugakkumulator 2 mit einem Schlüssel K kryptographisch verschlüsselt an die Ladevorrichtung 1 übertragen. Sobald die Ladevorrichtung 1 das verschlüsselt übertragene Ladeprogramm von dem Fahrzeugakkumulator 2 erhalten hat, fordert sie einen entsprechenden Schlüssel K von einem Server 8 des Akkumulatorherstellers zur Entschlüsselung des Ladeprogramms an. Nach Erhalt des Schlüssels K von dem Server 8 wird das verschlüsselt empfangene Ladeprogramm mit Hilfe des Schlüssels entschlüsselt. Anschließend erfolgt ein Ladevorgang des Fahrzeugakkumulators 2 unter Steuerung des entschlüsselten Ladeprogramms bzw. Ladeprofils.

Bei dem in Fig. 3 dargestellten Ausführungsbeispiel wird somit ein Ladeprogramm von einem Programmspeicher des Fahrzeugakkumulators 2 durch die Ladevorrichtung 1 bezogen. Bei einer alternativen Ausführungsform erhält die Ladevorrichtung 1 das Ladeprogramm LP von einem Server 8 des jeweiligen Fahrzeugakkumulatorherstellers in verschlüsselter oder unverschlüsselter Form.

Bei einer weiteren Variante liegt das Ladeprogramm der Ladevorrichtung 1 in einem internen Datenspeicher bereits vor. Bei dieser Ausführungsvariante wird lediglich ein Ladeprogramm anhand eines Akkumulatortyps bzw. anhand der empfangenen Akkumulator-ID selektiert.

Bei einer weiteren möglichen Ausführungsform verfügt die Ladesäule 3 über eine Nutzerschnittstelle, die es dem Nutzer bzw. Fahrer des Elektrofahrzeuges 4 erlaubt, zusätzlich Einfluss bei der Selektion des Ladeprogramms zu nehmen. Beispielsweise kann der Nutzer zwischen einem Normalladeprogramm, einem Schnellladeprogramm oder einem Pufferladeprogramm wählen. Bei eine weiteren möglichen Ausführungsform ist das Ladeprogramm konfigurierbar, wobei bestimmte Parameter des konfigurierbaren Ladeprogramms durch den Nutzer über die Nutzerschnittstelle der Ladesäule 3 innerhalb zulässiger Bereiche eingestellt werden kann. Beispielsweise kann der Nutzer die Ladezeit oder die Ladestromamplitude einstellen. Weiterhin kann der Ladevorgang in Abhängigkeit der Tageszeit oder eines bestimmten Nutzertarifs durchgeführt werden.

Bei dem erfindungsgemäßen Verfahren erfolgt das Laden des Fahrzeugakkumulators 2 entsprechend einem Ladeprofil bzw. Ladeprogramm, wobei das Ladeprogramm abhängig von einer Identifizierung bzw. einem Echtheitsnachweis des angeschlossenen Fahrzeugakkumulators 2 ausgewählt und aktiviert wird. Dadurch werden Ladeprogramme, die gegebenenfalls bei Verwendung mit einem anderen Akkumulatortyp zu einer Gefährdung führen, beispielsweise zu einer Explosion des Fahrzeugakkumulators, nur dann verwendet, wenn ein Originalfahrzeugakkumulator mit der Ladevorrichtung 1 verbunden ist. Weiterhin lässt sich durch entsprechende Auswahl eines Ladeprogramms erreichen, dass ein besonders vorteilhaftes Laden unter Steuerung des Ladeprogramms durchgeführt wird, d.h. ein besonders effizientes, schnelles und den Fahrzeugakkumulator 2 schonendes Laden.

Bei einer möglichen Ausführungsform überträgt der zu ladende Fahrzeugakkumulator 2 zunächst eine Geräte-ID zu seiner Identifizierung zu der Ladevorrichtung 1. Mittels dieser Geräte-ID bzw. Kennung können die Ladeprofildaten für den speziellen Fahrzeugakkumulatortyp der Ladestation von einem Server 8 oder direkt von dem Fahrzeugakkumulator 2 nachgeladen werden. Das Laden durch die Ladevorrichtung 1 erfolgt dann entsprechend dem selektierten Ladeprofil bzw. Ladeprogramm.

Der Fahrzeugakkumulator 2 identifiziert sich dabei vorzugsweise manipulationsgeschützt, d.h. er authentisiert sich gegenüber der Ladevorrichtung 1. Abhängig vom Ergebnis der Akkumulatoridentifizierung bzw. -authentisierung wird in einem ersten Schritt das Ladeprogramm ausgewählt und aktiviert, beispielsweise bei einer erfolgreichen Authentisierung des Fahrzeugakkumulators 2 ein Schnellladen, Normalladen, eine Ladungspufferung oder eine garantierte Ladezeit. Bei einer fehlgeschlagenen Authentisierung des Fahrzeugakkumulators 2 kann eine Ladeverweigerung erfolgen oder es kann nur ein bestimmtes Ladeprogramm ausgeführt werden, beispielsweise ein Normalladen oder Pufferladen. Weiterhin kann bei einer fehlgeschlagenen Authentisierung beispielsweise nur eine Ladung bis zu einem bestimmten Maximalwert bzw. bis zu einem maximal möglichen Nennwert, beispielsweise 50%, durchgeführt werden.

Bei einer möglichen Ausführungsform der erfindungsgemäßen Ladevorrichtung 1 werden Information bzw. Adressinformation, von wo das Ladeprogramm bzw. die Ladeprofildaten seitens der Ladevorrichtung 1 bezogen werden können, direkt auf dem Fahrzeugakkumulator 2 selbst gespeichert und können von dort ausgelesen werden. Beispielsweise kann der Fahrzeugakkumulator 2 eine entsprechende URL-Adresse bereitstellen, von der die Ladevorrichtung 1 ein entsprechendes Ladeprogramm beziehen kann. Bei einer weiteren möglichen Variante liegt das Ladeprofil als XML-Datei oder Textdatei vor. Bei einer bevorzugten Ausführungsform liegt das Ladeprogramm in Form eines ausführbaren Ladevorgangs-Steuerungsprogramm vor, beispielsweise als Java-Bytecode. Bei einer weiteren möglichen Variante ist das ausführbare Ladeprogramm direkt auf den Fahrzeugakkumulator 2 gespeichert und kann dort durch die Ladevorrichtung 1 ausgelesen und anschließend ausgeführt werden. Bei einer weiteren möglichen Ausführungsform ist das Ladeprogramm mittels eines EDRM-Schlüssels kryptographisch geschützt. Hierbei kann der EDRM-Schutz direkt an die Authentisierung des Fahrzeugakkumulators 2 gekoppelt sein. Ein EDRM-Lizenzserver stellt beispielsweise der Ladevorrichtung 1 nur dann eine entsprechende Lizenz aus, bei der sie das Ladeprogramm nutzen kann, wenn die Ladestation 3 gegenüber dem Lizenzserver nachweist, dass ein Originalakkumulator mit der Ladestation 3 verbunden ist. Damit kann sichergestellt werden, dass immer nur eine bestimmte Akku/Ladeprogrammkombination genutzt werden kann. Dies erlaubt es einem Fahrzeugakkumulatorhersteller, serienspezifische Laderoutinen bzw. Ladeprogramme bereitzustellen und zu schützen.

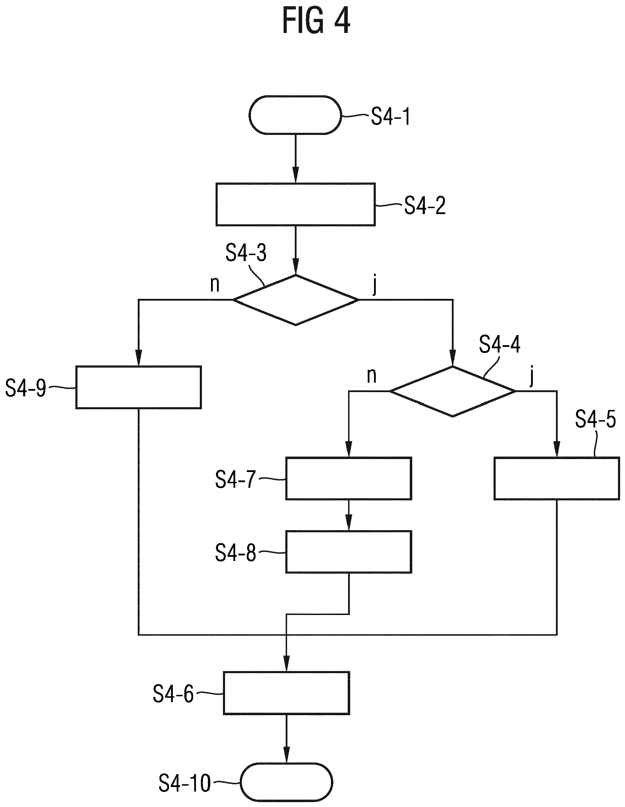

Die Ablaufdiagramme der Fig. 4, 5, 6 zeigen verschiedene Ausführungsvarianten zum Aufladen eines Fahrzeugakkumulators 2 durch die erfindungsgemäße Ladevorrichtung 1. Bei der Ausführungsvariante gemäß Fig. 4 erfolgt nach einem Startschritt S 4-1 zunächst eine Identifizierung des Fahrzeugakkumulators 2 durch die Ladevorrichtung 1 in Schritt S 4-2. In Schritt S 4-3 wird geprüft, ob die Identifizierung des Fahrzeugakkumulators 2 erfolgreich abgeschlossen wurde. Ist die Identifizierung bzw. die Authentisierung des Fahrzeugakkumulators 2 erfolgreich, wird in einem weiteren Schritt S 4-4 weiterhin geprüft, ob das Ladeprogramm lokal vorhanden ist oder nicht. Ist dies der Fall, wird in einem Schritt S 4-5 das in dem lokalen Datenspeicher vorhandene Ladeprogramm selektiert und durch die Steuereinheit der Ladevorrichtung 1 anschließend in Schritt S 4-6 das Laden des Fahrzeugakkumulators 2 ausgeführt. Ist das Ladeprofil bzw. das Ladeprogramm nicht lokal vorhanden, wird in einem Schritt S 4-7 ein oder mehrere Ladeprogramme für den jeweiligen Fahrzeugakkumulator 2 durch die Ladevorrichtung 1 nachgeladen, beispielsweise von einem Programmspeicher eines Servers des Fahrzeugakkumulatorherstellers. Anschließend erfolgt in Schritt S 4-8 eine Selektion bzw. eine Auswahl des nachgeladenen Ladeprogramms. Kann der angeschlossene Fahrzeugakkumulator 2 nicht erfolgreich authentisiert werden, kann bei dem in Fig. 4 dargestellten Ausführungsbeispiel beispielsweise ein Standard-Ladeprogramm durch die Ladevorrichtung 1 in Schritt S 4-9 ausgewählt werden und anschließend in Schritt S 4-6 ausgeführt werden. Der Vorgang endet in Schritt S 4-10.

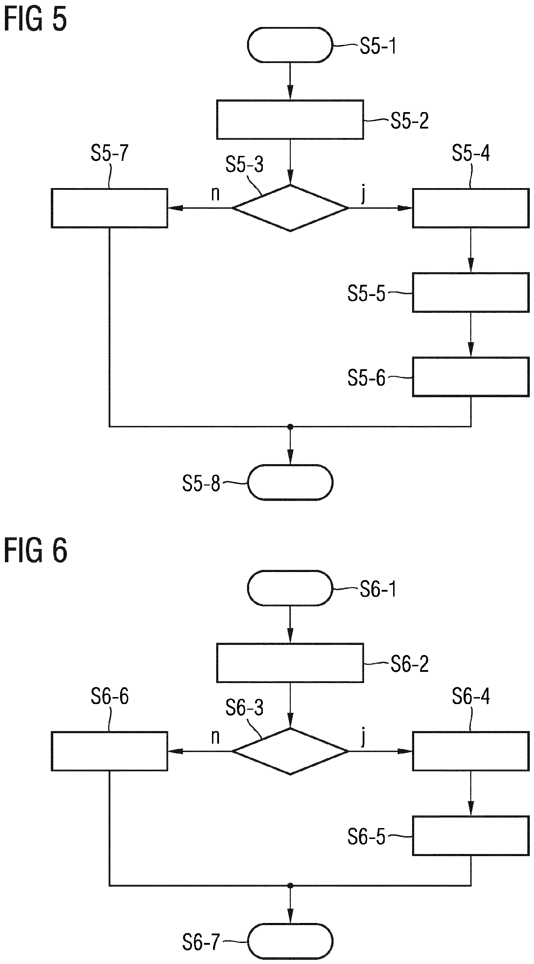

Fig. 5 zeigt eine weitere Ausführungsvariante zum Laden des Fahrzeugakkumulators 2 durch die erfindungsgemäße Ladevorrichtung 1. Nach einem Startschritt S 5-1 wird in einem Schritt S 5-2 die Originalität des angeschlossenen Fahrzeugakkumulators 2 durch die Ladevorrichtung 1 der Ladesäule 3 überprüft. In Schritt S 5-3 wird festgestellt, ob der Fahrzeugakkumulator 2 erfolgreich authentisiert worden ist. Ist dies der Fall, kann in einem Schritt S 5-4 ein Ladevorgang für den Fahrzeugakkumulator 2 durch die Ladevorrichtung 1 nachgeladen werden. Erfolgt die Übertragung des Ladeprogramms in verschlüsselter Form, erfolgt in einem weiteren Schritt S 5-5 weiterhin ein Nachladen eines kryptographischen Schlüssels zum Entschlüsseln des verschlüsselt erhaltenen Ladeprogramms, beispielsweise von einem Server des Fahrzeugakkumulatorherstellers. Anschließend wird der Ladevorgang in Schritt S 5-6 unter Steuerung des entschlüsselten Ladeprogramms durchgeführt. Wird in Schritt S 5-3 festgestellt, dass der Fahrzeugakkumulator 2 nicht authentisiert bzw. identifiziert werden konnte, erfolgt bei dem in Fig. 5 dargestellten Ausführungsbeispiels beispielsweise in einem Schritt S 5-7 die Auswahl eines Erhaltungsladen bzw. Pufferladen durch Auswahl eines entsprechenden Pufferladeprogramms. Der Vorgang endet in Schritt S 5-8.

Fig. 6 zeigt ein weiteres Ausführungsbeispiel für ein erfindungsgemäßes Ladeverfahren.

Nach einem Startschritt S 6-1 erfolgt zunächst in einem Schritt S 6-2 eine Überprüfung der Originalität des angeschlossenen Fahrzeugakkumulators 2 durch die Ladevorrichtung 1 der Ladesäule 3. In Schritt S 6-3 wird dann überprüft, ob der angeschlossene Fahrzeugakkumulator 2 erfolgreich identifiziert bzw. authentisiert werden konnte. Ist dies der Fall, erfolgt bei dem in Fig. 6 dargestellten Ausführungsbeispiel ein Laden eines entsprechenden Ladeprogramms des Fahrzeugakkumulators 2 von einem Programmspeicher, der in einem Server des Fahrzeugakkumulatorherstellers vorgesehen ist. Sobald die Ladevorrichtung das Ladeprogramm von dem Server des Fahrzeugakkumulatorherstellers empfangen hat, erfolgt der Ladevorgang unter Steuerung des Ladeprogramms bzw. der Ladeapplikation in Schritt S 6-5. Konnte der Fahrzeugakkumulator 2 nicht erfolgreich authentisiert bzw. identifiziert werden, erfolgt in Schritt S 6-6 ein Erhaltungsladen bzw. Pufferladen des Fahrzeugakkumulators 2 durch Ausführung eines entsprechenden Pufferladeprogramms. Der Vorgang endet in Schritt S 6-7.

Das erfindungsgemäße Verfahren und die erfindungsgemäße Vorrichtung zum Laden eines daran angeschlossenen Fahrzeugakkumulators 2 erlaubt eine flexible Handhabung von Ladeprogrammen bzw. Ladeprofilen abhängig von dem Fahrzeugakkumulatortyp und von einer Originalitätsprüfung des Fahrzeugakkumulators 2. Es lassen sich somit optimierte Ladeprofile bzw. Ladeprogramme bereitstellen, die dann nur für den entsprechenden Fahrzeugakkumulator 2 verwendbar sind. Ein physikalisch identischer Fahrzeugakkumulator kann durch mögliche Ladeprofile bzw. Ladeprogramme differenziert werden, beispielsweise ein preiswerter Fahrzeugakkumulator mit Standard-Laden oder ein Premiumfahrzeugakkumulator mit beschleunigter Aufladung. Das erfindungsgemäße Verfahren erlaubt zudem ein Nachladen von Ladeprogrammen oder Ladeprogrammapplikationen auch in einem Offline-Betrieb der Ladesäule 3 durch einen internen Speicher des Fahrzeugakkumulators 2. Weiterhin ist ein Standard-Laden des Fahrzeugakkumulators 2 auch in Situationen möglich, in denen eine Originalität des Fahrzeugakkumulators 2 nicht verifiziert werden kann. Die Erfindung schafft ferner einen auswechselbaren Fahrzeugakkumulator 2, in den eine entsprechende Ladevorrichtung 1 zum Laden des Fahrzeugakkumulators integriert ist. Weiterhin schafft die Erfindung ein Elektrofahrzeug, in dem sich eine Ladevorrichtung 1 zum Laden eines Fahrzeugakkumulators 2 befindet. Bei einem Fahrzeug 4 muss es sich nicht notwendigerweise um ein elektrobetriebenes Straßenfahrzeug handeln. Bei dem Fahrzeug 4 kann es sich auch um ein Schienenfahrzeug, ein Flugzeug oder ein Wasserfahrzeug handeln. Weitere Varianten sind möglich. Beispielsweise kann ein Nutzer des Fahrzeugs eine Vielzahl unterschiedlicher Ladeprogramme und entsprechenden Tarifen über eine Nutzerschnittstelle, beispielsweise eine grafische Nutzerschnittstelle der Ladesäule 3 angezeigt erhalten und anschließend ein für ihn geeignetes Ladeprogramm manuell selektieren. Die Auswahl des Ladeprogramms kann somit einerseits manuell durch den Nutzer des Fahrzeugs erfolgen oder automatisch durch die Ladevorrichtung 1 anhand bestimmter Kriterien, insbesondere des Fahrzeugakkumulatortyps. Weitere Selektionskriterien sind ein Benutzertarif des Fahrzeugnutzers, ein an den Fahrzeugakkumulator 2 gebundener Tarif sowie weitere Parameter, insbesondere Umweltparameter, die durch Sensoren der Ladesäule 3 erfasst werden. Beispielsweise kann der Ladevorgang bzw. das Ladeprogramm in Abhängigkeit der Umgebungstemperatur selektiert werden. Weiterhin kann das Ladeprogramm in Abhängigkeit de Amplitude des von dem Stromversorgungsnetzwerk 5 bereitgestellten Versorgungsstroms selektiert werden.

Stellt die Ladevorrichtung 1 bei einer möglichen Ausführungsvariante fest, dass es sich bei dem angeschlossenen Fahrzeugakkumulator 2 um ein Plagiat eines Herstellers handelt, kann es den Aufladevorgang verweigern und gegebenenfalls eine entsprechende Meldung an den entsprechenden Fahrzeugakkumulatorhersteller übertragen.

Der in Fig. 1 dargestellte Fahrzeugakkumulator 2 muss sich nicht notwendigerweise in einem Fahrzeug 4 befinden. Bei einer möglichen Ausführungsvariante sind an einer Ladesäule 3 eine Vielzahl von Akkumulatoren 2, insbesondere Fahrzeugakkumulatoren, parallel aufladbar. Bei den Akkumulatoren 2 kann es sich um beliebige Akkumulatoren handeln, welche beispielsweise auch in andere Geräte einsetzbar sind.

Das Nachladen eines Ladeprogramms kann, wie in Fig. 1 dargestellt, drahtgebunden über ein Datennetzwerk von einem Server 8 erfolgen. Der Server 8 kann ein zentraler Server verschiedener Hersteller oder Ladestationsbetreiber sein oder ein Server eines Fahrzeugakkumulatorherstellers. Weiterhin kann das Nachladen eines Ladeprogramms bei Bedarf auch drahtlos über ein Funknetzwerk erfolgen. Die Erfindung erlaubt es auch, Ladestationen 3 zu betreiben, welche über keinen Anschluss zu einem Datennetzwerk 7 verfügen. Bei einer weiteren möglichen Ausführungsvariante wird das Ladeprogramm bei Bedarf über ein tragbares Endgerät des Nutzers des Fahrzeugs, beispielsweise sein Mobiltelefon, geladen und von dort der Ladevorrichtung 1 zur Verfügung gestellt. Bei dieser Ausführungsform verfügt die Ladevorrichtung 1 über eine Schnittstelle, um das Ladeprogramm bzw. die Ladeprogrammapplikation von einem Mobilfunktelefon des Nutzers des Elektrofahrzeugs 4 herunterzuladen. Der Nutzer eines Fahrzeugs, beispielsweise eines Audi A6, kann beispielsweise von einer Homepage des Fahrzeugherstellers für die verschiedenen Fahrzeugakkumulatoren seines Fahrzeugs entsprechende Ladeprogramme herunterladen und diese einer Ladevorrichtung 1 bei Bedarf zur Durchführung des Ladevorgangs zur Verfügung stellen. Bei dieser Ausführungsvariante wird das Ladeprogramm zunächst in einen Programmspeicher eines mobilen Endgeräts des Nutzers heruntergeladen und anschließend an die Ladevorrichtung 1 über eine Schnittstelle zwischen Endgerät und Ladevorrichtung 1 zur Ausführung des Ladeprogramms übertragen.

## Patentansprüche

1. Ladevorrichtung (1) zum Laden eines daran angeschlossenen Fahrzeugakkumulators (2), welcher unter Steuerung eines konfigurierbaren Ladeprogramms aufladbar ist, wobei
- die Ladevorrichtung (1) eine Authentisierungseinheit aufweist, welche zur Authentisierung des Fahrzeugakkumulators (2) gegenüber der Ladevorrichtung vorgesehen ist, und
- die Ladevorrichtung (1)eine Steuereinheit mit einem Ladeprogrammspeicher aufweist, wobei ein in dem Ladeprogrammspeicher gespeichertes Ladeprogramm in Abhängigkeit des Akkumulatortyps des an die Ladevorrichtung (1) angeschlossenen Fahrzeugakkumulators (2) und eines von der Authentisierungseinheit gelieferten Authentisierungsergebnisses selektiert und von dem Ladeprogrammspeicher zu der Steuereinheit der Ladevorrichtung (1) zu dessen Ausführung übertragen wird, wobei die Ladevorrichtung (1) das Ladeprogramm zum Laden des Fahrzeugakkumulators (2) ausführt;
**dadurch gekennzeichnet, dass** das Ladeprogramm zum Aufladen des Fahrzeugakkumulators (2) von dem Ladeprogrammspeicher nach erfolgter Authentisierung des Fahrzeugakkumulators (2) kryptographisch verschlüsselt zu der Steuereinheit der Ladevorrichtung (1) übertragen wird, wobei die Steuereinheit der Ladevorrichtung (1) zur Entschlüsselung des verschlüsselt empfangenen Ladeprogramms einen kryptographischen Schlüssel von einem Server (8) des Herstellers des jeweiligen Fahrzeugakkumulators bezieht.

2. Ladevorrichtung nach Anspruch 1, **dadurch gekennzeichnet, dass** der Ladeprogrammspeicher in der Ladevorrichtung (1), in einem mit der Ladevorrichtung (1) über ein Datennetzwerk verbundenen Ladedatenserver (8) oder in dem Fahrzeugakkumulator (2) vorgesehen ist.

3. Ladevorrichtung nach Anspruch 2, **dadurch gekennzeichnet, dass** der mit der Ladevorrichtung (1) verbundene Ladedatenserver (8) ein Ladedatenserver eines Herstellers des Fahrzeugakkumulators ist.

4. Ladevorrichtung nach einem der vorangehenden Ansprüche 1 - 3, **dadurch gekennzeichnet, dass** die Ladevorrichtung (1) in einer Ladezapfsäule (3) oder in einem Elektrofahrzeug (4) vorgesehen ist.

5. Ladevorrichtung nach einem der vorangehenden Ansprüche 1 - 4, **dadurch gekennzeichnet, dass** die in dem Ladeprogrammspeicher gespeicherten Ladeprogramme für die verschiedenen Fahrzeugakkumulatoren (2) jeweils
- ein Schnellladeprogramm zum Aufladen des Fahrzeugakkumulators (2) mit einem hohen Ladestrom in einer vorbestimmten geringen Zeitdauer,
- ein Normalladeprogramm zum Aufladen des Fahrzeugakkumulators (2) mit einem geringen Ladestrom in einer vorbestimmten Zeitdauer und
- ein Pufferladeprogramm aufweist.

6. Ladevorrichtung nach Anspruch 1, **dadurch gekennzeichnet, dass** die Steuereinheit der Ladevorrichtung (1) das mittels des bezogenen kryptographischen Schlüssels des Fahrzeugakkumulatorherstellers entschlüsselte Ladeprogramm zum Aufladen des an die Ladevorrichtung (1) angeschlossenen Fahrzeugakkumulators (2) ausführt.

7. Verfahren zum Laden eines Fahrzeugakkumulators (2) durch eine Ladevorrichtung (1) unter Steuerung eines konfigurierbaren Ladeprogramms, wobei
- sich der Fahrzeugakkumulator (2) nach Anschluss an die Ladevorrichtung (1) gegenüber der Ladevorrichtung (1) authentisiert, und
- das Ladeprogramm zum Laden des Fahrzeugakkumulators (2) in Abhängigkeit des Fahrzeugakkumulators (2) und des Authentisierungsergebnisses selektiert wird, aus einem Ladeprogrammspeicher ausgelesen und an eine Steuereinheit der Ladevorrichtung (1) zu dessen Ausführung übertragen wird, wobei das Ladeprogramm zum Laden des Fahrzeugakkumulators (2) ausgeführt wird
**dadurch gekennzeichnet, dass**
das Ladeprogramm zum Aufladen des Fahrzeugakkumulators (2) von dem Ladeprogrammspeicher nach erfolgter Authentisierung des Fahrzeugakkumulators (2) kryptographisch verschlüsselt zu der Steuereinheit der Ladevorrichtung (1) übertragen wird, wobei die Steuereinheit der Ladevorrichtung (1) zur Entschlüsselung des verschlüsselt empfangenen Ladeprogramms einen kryptographischen Schlüssel von einem Server (8) des Herstellers des jeweiligen Fahrzeugakkumulators (2) bezieht.

8. Verfahren nach Anspruch 7, **dadurch gekennzeichnet, dass** die Steuereinheit der Ladevorrichtung (1) das mittels des bezogenen kryptographischen Schlüssels des Fahrzeugakkumulatorherstellers entschlüsselte Ladeprogramm zum Aufladen des an die Ladevorrichtung (1) angeschlossenen Fahrzeugakkumulators (2) ausführt.

## Claims

1. Charging device (1) for charging a vehicle accumulator (2) connected thereto which can be charged under the control of a configurable charge program, wherein
- the charging device (1) has an authentication unit which is intended for authentication of the vehicle accumulator (2) with respect to the charging device, and
- the charging device (1) has a control unit with a charge program memory, wherein a charge program stored in the charge program memory is selected depending on the accumulator type of the vehicle accumulator (2) connected to the charging device (1) and on a result of an authentication delivered by the authentication unit and transferred to the control unit of the charging device (1) from the charge program memory for execution, wherein the charging device (1) executes the charge program for charging the vehicle accumulator;
**characterised in that** the charge program for charging the vehicle accumulator (2) is transferred from the charge program memory to the control unit of the charging device (1) in cryptographically encrypted form after authentication of the vehicle accumulator (2) has taken place, wherein the control unit of the charging device (1) obtains from a server (8) of the manufacturer of the particular vehicle accumulator a cryptographic key for decryption of the charge program received in encrypted form.

2. Charging device according to claim 1, **characterised in that** the charge program memory in the charging device (1) is provided in a charge data server (8) connected to the charging device by way of a data network or in the vehicle accumulator (2).

3. Charging device according to claim 2, **characterised in that** the charge data server (8) connected to the charging device (1) is a charge data server of a manufacturer of the vehicle accumulator.

4. Charging device according to one of the preceding claims 1 - 3, **characterised in that** the charging device (1) is provided in a charging post (3) or in an electric vehicle (4) .

5. Charging device according to one of the preceding claims 1 - 4, **characterised in that** the charge programs stored in the charge program memory for the different vehicle accumulators (2) in each case have
- a fast charge program for charging the vehicle accumulator (2) with a high charging current in a predetermined short period of time,
- a normal charge program for charging the vehicle accumulator (2) with a low charging current in a predetermined period of time and
- a buffer charge program.

6. Charging device according to claim 1, **characterised in that** the control unit of the charging device (1) executes the charge program decrypted by means of the cryptographic key of the vehicle accumulator manufacturer obtained, in order to charge the vehicle accumulator (2) connected to the charging device (1).

7. Method for charging a vehicle accumulator (2) by means of a charging device (1) under the control of a configurable charge program, wherein
- after connection to the charging device (1) the vehicle accumulator (2) authenticates itself with respect to the charging device (1), and
- the charge program for charging the vehicle accumulator (2) is selected depending on the vehicle accumulator (2) and the result of an authentication, is read out from a charge program memory and is transferred to a control unit of the charging device (1) for execution, wherein the charge program is executed in order to charge the vehicle accumulator (2),
**characterised in that**
the charge program for charging the vehicle accumulator (2) is transferred in cryptographically encrypted form from the charge program memory to the control unit of the charging device (1) after authentication of the vehicle accumulator (2) has taken place, wherein the control unit of the charging device (1) obtains a cryptographic key from a server (8) of the manufacturer of the particular vehicle accumulator (2) in order to decrypt the charge program received in encrypted form.

8. Method according to claim 7, **characterised in that** the control unit of the charging device (1) executes the charge program decrypted by means of the cryptographic key of the vehicle accumulator manufacturer obtained, in order to charge the vehicle accumulator (2) connected to the charging device (1).

## Revendications

1. Chargeur (1) pour le chargement d'un accumulateur de véhicule (2) qui lui est raccordé, qui peut être chargé via l'exécution d'un programme de chargement qui peut être configuré, dans lequel
- le chargeur (1) présente une unité d'authentification qui est prévue pour l'authentification de l'accumulateur de véhicule (2) par rapport au chargeur ; et
- le chargeur (1) présente une unité de commande comprenant une mémoire de programmes de chargement, dans lequel un programme de chargement mémorisé dans la mémoire de programmes de chargement est sélectionné en fonction du type d'accumulateur de l'accumulateur de véhicule (2) raccordé au chargeur (1) et d'un résultat d'authentification livré par l'unité d'authentification et est transmis de la mémoire de programmes de chargement à l'unité de commande du chargeur (1) pour son exécution, dans lequel le chargeur (1) exécute le programme de chargement pour le chargement de l'accumulateur de véhicule (2) ;
**caractérisé en ce que** le programme de chargement pour le chargement de l'accumulateur de véhicule (2) à partir de la mémoire de programmes de chargement, après avoir procédé à l'authentification de l'accumulateur de véhicule (2), est transmis, après avoir été soumis à un chiffrage cryptographique, à l'unité de commande du chargeur (1), dans lequel l'unité de commande du chargeur (1), pour le déchiffrage du programme de chargement reçu sous forme chiffrée, se réfère à une clé cryptographique fournie par un serveur (8) du fabricant de l'accumulateur de véhicule respectif.

2. Chargeur selon la revendication 1, **caractérisé en ce que** la mémoire de programmes de chargement est prévue dans le chargeur (1), dans un serveur de données de chargement (8) relié au chargeur (1) via un réseau de données ou dans l'accumulateur de véhicule (2).

3. Chargeur selon la revendication 2, **caractérisé en ce que** le serveur de chargement (8) relié au chargeur (1) est un serveur de données de chargement d'un fabricant de l'accumulateur de véhicule.

4. Chargeur selon l'une quelconque des revendications précédentes 1 à 3, **caractérisé en ce que** le chargeur (1) est prévu dans une borne de chargement (3) ou dans un véhicule électrique (4).

5. Chargeur selon l'une quelconque des revendications précédentes 1 à 4, **caractérisé en ce que** les programmes mémorisés dans la mémoire de programmes de chargement présentent, pour les différents accumulateurs de véhicules (2), respectivement :
- un programme de chargement rapide pour le chargement de l'accumulateur de véhicule (2) avec un régime de charge élevé au cours d'un laps de temps limité prédéterminé ;
- un programme de chargement normal pour le chargement de l'accumulateur de véhicule (2) avec un régime de charge limité au cours d'un laps de temps prédéterminé ; et
- un programme de chargement faisant tampon.

6. Chargeur selon la revendication 1, **caractérisé en ce que** l'unité de commande du chargeur (1) exécute le programme de chargement décrypté au moyen de la clé cryptographique concernée du fabricant de l'accumulateur de véhicule pour le chargement de l'accumulateur de véhicule (2) raccordé au chargeur (1).

7. Procédé pour le chargement d'un accumulateur de véhicule (2) via un chargeur (1) via l'exécution d'un programme de chargement qui peut être configuré, dans lequel :
- l'accumulateur de véhicule (2) est soumis à une authentification après son raccordement au chargeur (1) par rapport au chargeur (1) ; et
- le programme de chargement pour le chargement de l'accumulateur de véhicule (2) : est sélectionné en fonction de l'accumulateur de véhicule (2) et du résultat de l'authentification ; est extrait par lecture d'une mémoire de programmes de chargement ; et est transmis à une unité de commande du chargeur (1) pour son exécution ; dans lequel le programme de chargement est exécuté pour le chargement de l'accumulateur de véhicule (2) ;
**caractérisé en ce que**
le programme de chargement pour le chargement de l'accumulateur de véhicule (2) à partir de la mémoire de programmes de chargement, après avoir procédé à l'authentification de l'accumulateur de véhicule (2), est transmis, après avoir été soumis à un chiffrage cryptographique, à l'unité de commande du chargeur (1), dans lequel l'unité de commande du chargeur (1) dispose, pour le déchiffrage du programme de chargement reçu sous forme chiffrée se réfère à une clé cryptographique fournie par un serveur (8) du fabricant de l'accumulateur de véhicule (2) respectif.

8. Procédé selon la revendication 7, **caractérisé en ce que** l'unité de commande du chargeur (1) exécute le programme de chargement décrypté au moyen de la clé cryptographique concernée du fabricant de l'accumulateur de véhicule pour le chargement de l'accumulateur de véhicule (2) raccordé au chargeur (1).
